# EUROPÄISCHE PATENTSCHRIFT

(11) **EP 0 819 556 B1**
(45) Veröffentlichungstag und Bekanntmachung des Hinweises auf die Patenterteilung: **24.04.2002**
(21) Anmeldenummer: 97111157.0
(22) Anmeldetag: 03.07.1997
(51) Int. Cl.: B60G 7/00, F16F 1/393

(54) **Gelenklager, insbesondere zur Lagerung von Achslenkern in Kraftfahrzeugen**
Joint assembly, especially for an axle steering device of a motor vehicle
Pallier à articulation,en particulier pour un guide d'essieu de véhicule automobile

(30) Priorität: 10.07.1996 DE 19627753
(43) Veröffentlichungstag der Anmeldung: 21.01.1998
(73) Patentinhaber: Jörn GmbH, D-70736 Fellbach (DE)
(72) Erfinder: Zawadzki, Bernd, 71404 Korb (DE)
(74) Vertreter: Neubauer, Hans-Jürgen, Dipl.-Phys.

(56) Entgegenhaltungen:
- EP-A- 0 409 704
- EP-A- 0 544 112
- DE-A- 2 114 507
- DE-A- 3 715 360
- US-A- 2 959 437
- US-A- 3 117 810
- US-A- 3 147 964

## Beschreibung

Die Erfindung betrifft ein Gelenklager, insbesondere zur Lagerung von Achslenkern in Kraftfahrzeugen nach dem Oberbegriff des Anspruchs 1.

Es sind bereits Lager mit in unterschiedlichen Belastungsrichtungen unterschiedlichen Federkennungen oder gestuften Federkennungen bekannt.

Es ist eine Lagerbuchse bekannt (US-PS 3,147,964) mit einem zylindrischen Lagerinnenteil und einem zylindrischen Aufnahmeauge mit einer dazwischen eingepreßten Gummibuchse, bei der an der Umfangsfläche in verschiedenen Segmenten Gummiausnehmungen vorhanden sind. In diesen Raumrichtungen ist die Federkennung gegenüber anderen Raumrichtungen reduziert, kardanische Auslenkungen sind hier nicht vorgesehen.

Bei einem weiter bekannten Gelenklager (DE 37 15 360 C2) ist ein hülsenförmiger Elastomerkörper mit im nicht vorgespannten Zustand zylindrischer Umfangsfläche verwendet. Dieser ist in ein im wesentlichen zylindrisches Aufnahmeauge unter Vorspannung eingesetzt. Die Innenflächen des Aufnahmeauges weisen in einer mittleren Zone Materialausnehmungen auf, die die Vorspannung des hülsenförmigen Elastomerkörpers in dieser Zone herabsetzen. Der Werkstoff des Elastomerkörpers kann dabei an der Innenkontur des Aufnahmeauges von vornherein schon vollkommen anliegen oder aber zu den Flächen der Materialaussparung nur partiellen Kontakt aufweisen. Bei geringer Belastung werden hier Lagerkräfte lediglich an den seitlichen Enden des Gelenkkörpers übertragen. Mit zunehmender Radialbelastung wächst der Traganteil des Gelenks, so daß auch der Federwiderstand mit einer progressiven Federkennung wächst.

Die Herstellung einer hinterschnittenen Materialausnehmung an der Innenfläche des metallischen Aufnahmeauges ist aufwendig. Zudem wird das Elastomermaterial am Übergangsbereich zwischen der Materialaussparung und den seitlich anschließenden Zylinderbereichen des Aufnahmeauges stark mit hohen Druckbelastungen, insbesondere bei Radial- und zusätzlichen Axialbelastungen des Lagers beansprucht. Eine besonders starke Beanspruchung des Elastomermaterials ergibt sich im Eckrandbereich, wo seitliche, metallische Stützringe an das Aufnahmeauge angrenzen, da dort das Elastomermaterial durch Reibungshaftung oder Vulkanisation festliegt und dadurch bei hohen Belastungen nicht ausweichen kann. Dabei ist zu berücksichtigen, daß gerade diese Bereiche von Anfang an bei einer Lagerauslenkung belastet sind und ständig zunehmend weiter belastet werden. Das Elastomermaterial im Bereich der Materialaussparungen am Aufnahmeauge ist dagegen erst allmählich und insgesamt immer weniger als das Elastomermaterial in den Seitenbereichen belastet und beansprucht. Eine solche mögliche, extrem hohe Belastung des Elastomermaterials mit einem hohen Druckanteil kann die Lebensdauer reduzieren.

Bei der hier im Ausführungsbeispiel gezeigten umlaufenden Aussparung mit zylindrischer Innenfläche ergibt sich für geringere Lagerauslenkungen eine weichere Federanordnung durch die beiden wirkenden Seitenbereiche, denen eine weitere Feder bei größerer Auslenkung im mittleren Bereich des Aufnahmeauges zugeschaltet wird. Dies führt zu einer weitgehend sprunghaften Änderung in der Federkennung. Die Dimensionierungsmöglichkeiten insbesondere hinsichtlich eines gleichmäßigen Übergangs in der Kennlinienprogression sind hier eingeschränkt.

Bei einem weiter bekannten Gelenklager (EP 0 544 112 A1) haben axial äußere Stützringe ein Untermaß gegenüber dem Innendurchmesser des Aufnahmeauges. Zudem weist der Elastomerkörper im nicht vorgespannten Zustand, mittig umlaufend eine ballige und beidseitig daneben eine umlaufend taillierte Mantelflächengeometrie auf. Durch diese Mantelflächengeometrie in Verbindung mit dem Untermaß der Stützringe soll die Möglichkeit einer Drehbewegung zwischen dem Innenteil und dem Aufnahmeauge hergestellt werden.

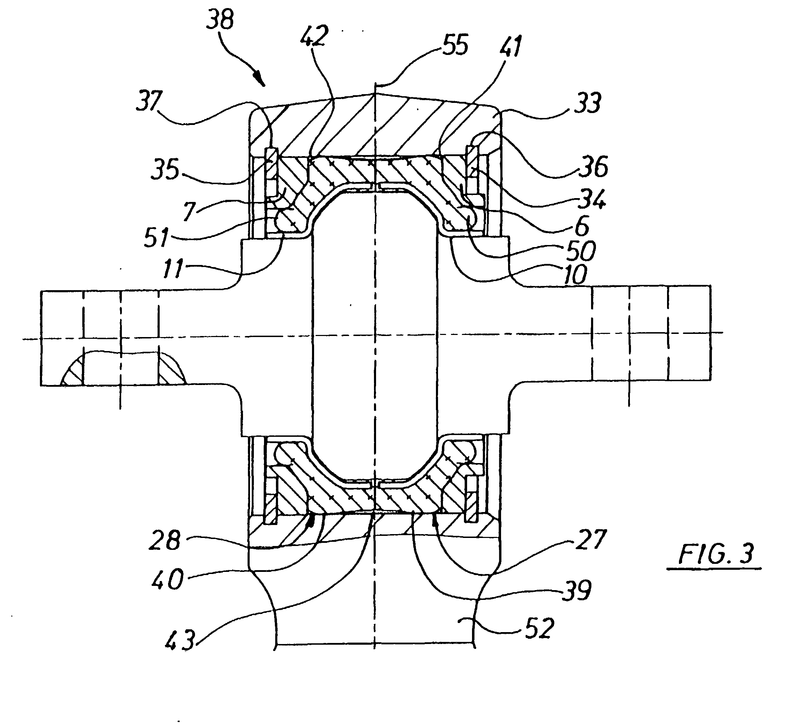

Ein bekanntes, gattungsgemäßes Gelenklager (EP 0 409 704 A1) besteht aus einem metallischen, balligen Lagerinnenteil als erstem Lagerteil mit wenigstens einem abstehenden Lageranschlußteil, aus einem metallischen Gehäuse als zweitem Lagerteil, das einen zylindrischen Innenraum als Aufnahmeauge aufweist und aus einem Elastomerkörper zwischen dem Lagerinnenteil und dem Aufnahmeauge, der den balligen Bereich des Lagerinnenteils übergreift. Der Elastomerkörper ist axial zwischen beidseitigen Stützringen vorgespannt, wobei die Stützringe einen Außendurchmesser entsprechend dem Innendurchmesser des Auges aufweisen. Die Umfangsfläche des Elastomerkörpers ist im nicht vorgespannten Zustand in den beiden axialen Seitenbereichen zylindrisch geformt und bildet anschließend an die seitlichen Zylinderformen an der Umfangsfläche zur axialen Lagermitte einen sich verjüngenden Doppelkonus (Fig. 3b). Die seitlichen Zylinderformen haben jedoch hier im nicht vorgespannten Zustand gegenüber dem Innendurchmesser des Aufnahmeauges bzw. dem Außendurchmesser der Stützringe einen größeren Durchmesser. Dadurch treten gerade hier im fertig montierten und vorgespannten Zustand betriebsmäßig große Beanspruchungen des umlaufende Elastamerwülste bildenden Elastomermaterials auf, die die Lebensdauer des Gelenklagers reduzieren können.

Bei geringer Lagerauslenkung bewirken die am Aufnahmeaüge und an den Stüteringen anliegenden Elastomerwülste eine relativ weiche Federkennung. Im fertig montierten und vorgespannten Zustand in zwischen den Elastomerwülsten ein zylindrischer Bereich des Elastomerkörpers ausgebildet, sodaß bei stärkeren Lagerauslenkungen dieser Bereich zur Anlage kommt und die Federkennung von einem weitgehend linearen Anstieg in einem progressiven übergeht.

Aufgabe der Erfindung ist es, ein gattungsgemäßes Gelenklager so weiterzubilden, daß in Verbindung mit einer progressiv ansteigenden Federkennung eine große Lagerlebensdauer gewährleistet ist.

Diese Aufgabe wird mit den kennzeichnenden Merkmalen des Anspruchs 1 gelöst.

Gemäß Anspruch 1 ist die Umfangsfläche des Elastomerkörpers im nicht vorgespannten Zustand in den beiden axialen Seitenbereichen etwa zylindrisch geformt mit einem Untermaß im Durchmesser gegenüber dem Innendurchmesser des Aufnahmeauges bzw. dem Außendurchmesser der Stützringe. Dadurch ist eine jeweils umlaufende Stufe zwischen einem Stützringumfangsrand und einer Zylindermantelfläche eines Seitenbereichs des Elastomerkörpers gebildet. Der Elastomerkörper verjüngt sich anschließend an seinen zylindrischen Seitenbereichen an der Umfangsfläche zur axialen Lagermitte hin und bildet dadurch eine Doppelkonusform.

Als besonders vorteilhaft und geeignet für geräuscharme Lagerungen hat sich eine Dimensionierung der Elastomerkörper, des Lagerinnenteils, des Aufnahmeauges und der Vorspannung dergestalt erwiesen, daß im nicht eingefederten Zustand des Lagers die zwei am Elastomerkörper gegeneinander axial versetzte umlaufenden Elastomerwülste auch gegenüber den axial äußeren Stützringen etwas versetzte gebildet sind. Diese liegen vorgespannt am Aufnahmeauge an und bewirken bei geringen Lagerauslenkungen eine relativ weiche Federkennung, wogegen bei stärkeren Lagerauslenkungen nach und nach der doppelkonische Bereich zur Anlage kommt und einen allmählich zunehmenden progressiven Anstieg der Federkennung bewirkt, wobei aber ein abrupter Übergang vermieden ist.

Aufgrund der umlaufenden Stufe zwischen jedem Stützringumfangsrand und der angrenzenden Zylindermantelfläche des Elastomerkörpers verbleibt der Eckrandbereich auch bei einer axialen Vorspannung durch den Versatz gegenüber den Stützringen wesentlich weniger belastet, als ohne eine solche Stufe. Insbesondere wenn bei Verwendung eines Gummikörpers metallische Stützringe anvulkanisiert sind, wird der Randeckbereich von extremen Gummibelastungen freigehalten, so daß dadurch die Lebensdauer des Lagers erhöht wird. Dies ist wesentlich, da der mittlere Elastomerkörperbereich mit der Doppelkonusform erst nach und nach bei größeren Lagerauslenkungen zur Wirkung kommt und eine Trag- und Abstützfunktion übernimmt. Durch die Doppelkonusform ist eine einfache Dimensionierung und Anpassung an unterschiedliche Gegebenheiten durch Variation des Konuswinkels und der Konuslänge möglich. Die Konusform am Elastomerkörperumfang ist einfach und preisgünstig herzustellen. Da das Elastomermaterial in keine Ausnehmungen am Aufnahmeauge hineingepreßt wird, treten im Bereich des Doppelkonus auch keine ungünstig hohen Materialbeanspruchungen z. B. durch Scherkräfte auf, wie dies im Stand der Technik möglich ist. Der Doppelkonusbereich kann zudem relativ breit gewählt werden, so daß hier in jedem Fall weite Übergänge in den Beanspruchungsbereichen möglich sind.

Bei üblichen Aufnahmeaugendurchmessern von ca. 80 mm bis 100 mm haben sich gemäß Anspruch 2 und Anspruch 3 relativ geringe Abstufungen zwischen Zylindermantelfläche und angrenzendem Stützringumfangsrand von ca. 1 mm als geeignet und ausreichend erwiesen, bei einem Konuswinkel des Doppelkonus zwischen 3° und 15°, bevorzugt 7,2°.

Zur Vereinfachung der Montage und Herstellung des Elastomerkörpers, insbesondere des Doppelkonus wird mit Anspruch 4 vorgeschlagen, in an sich bekannter Weise zwei Elastomerlagerschalen zu verwenden.

Das Innenteil kann je nach den Gegebenheiten nach Anspruch 5 kugelförmig mit beidseitigen Anschlußpratzen ausgebildet sein.

Bei einer besonders bevorzugten Ausführungsform ist das Innenteil etwa scheibenförmig gestaltet mit Kantenrundungen, wobei beidseitig von den Scheibenflächen Anschlußpratzen abstehen. Bevorzugt ist das Verhältnis zwischen Scheibendicke und Scheibendurchmesser in einem Verhältnis von etwa 3 : 8 gewählt.

Nach Anspruch 7 sind die elastischen Seitenbereiche des Elastomerkörpers und die Bereiche der Kantenrundung axial etwa gleich lang und überdecken sich etwa zur Hälfte in axialer Richtung. Dadurch treten in diesen Bereichen, die ständig Tragfunktion haben und bei geringen Lagerauslenkungen von Anfang an belastet sind, bevorzugt Druck-Schubbelastungen auf, was gegenüber Belastungen mit hohem Druckanteil zu einer erheblichen Lebensdauerverlängerung führt. Dieser Effekt kann durch (in einem Längsschnitt gesehene) relativ steil angestellte Kantenabrundungen von wenigstens 45° vergrößert werden.

Nach Anspruch 8 sind in einer weiterführenden Ausführungsform im Bereich der Anlagefläche zum Lagerinnenteil im Elastomerkörper bzw. den Elastomerlagerschalen Zwischenbleche eingeformt, die einen zur Lageraußenseite abstehenden zylindrischen Kragen aufweisen, mit dem sie formschlüssig einen jeweils zylindrischen Seitenfortsatz des Lagerteils umgreifen. An diesen Seitenfortsatz schließt sich jeweils eine Befestigungspratze an.

Anhand einer Zeichnung werden Ausführungsbeispiele der Erfindung näher erläutert.

Es zeigen:
- Fig. 1: einen Schnitt durch eine Elastomerlagerschale als Schalenhälfte eines Elastomerkörpers eines Gelenklagers,
- Fig. 2: ein metallisches, balliges Lagerinnenteil mit geschnittenen, beidseitig aufgesetzten Elastomerlagerschalen,
- Fig. 3: einen Schnitt durch ein fertig montiertes Gelenklager, bei dem der Gegenstand nach Fig. 2 in ein metallisches Gehäuse als Aufnahmeauge unter Vorspannung eingesetzt ist, und
- Fig. 4: eine alternative Ausführungsform zu Fig. 3.

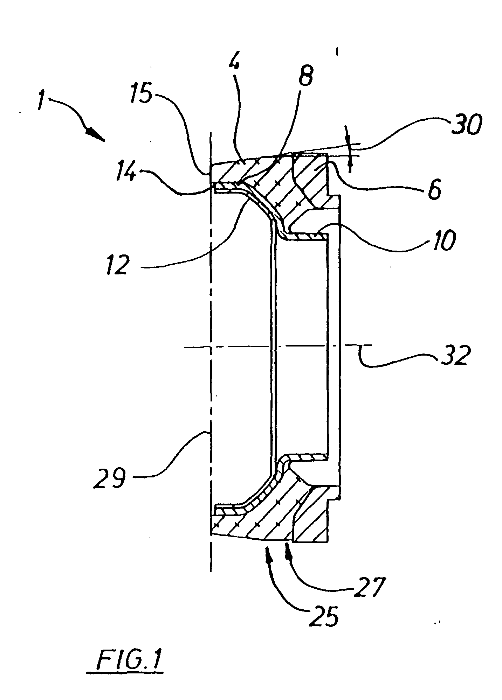

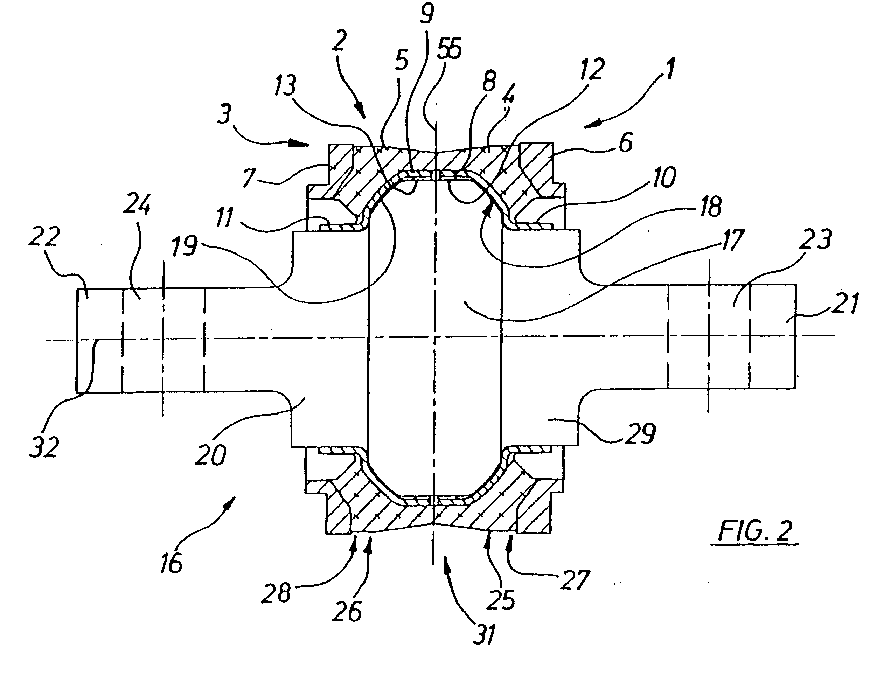

In Fig. 1 ist eine Elastomerlagerschale 1 dargestellt als Schalenhälfte eines Elastomerkörpers 2, der insgesamt zusammen mit einer weiteren Elastomerlagerschale 3 aus Fig. 2 ersichtlich ist. Die Elastomerlagerschalen 1, 3 weisen jeweils ein Gummiteil 4, 5 auf, an dessen axialer Außenseite jeweils Stützringe 6, 7 anvulkanisiert sind. An der Lagerschaleninnenseite sind jeweils Zwischenbleche 8, 9 eingeformt, die zur Lagerschalenaußenseite mit einem zylindrischen Kragen 10, 11 abstehen. An der Schaleninnenseite sind die Zwischenbleche 8, 9 jeweils mit einem dünnen Gummifilm 12, 13 versehen. Der lagerinnenseitige Rand 14 der Zwischenbleche 8, 9 ist jeweils gegenüber dem lagerinnenseitigen Rand 15 der Gummiteile 4, 5 axial zurückversetzt.

In Fig. 2 sind die beiden Elastomerlagerschalen 1, 3 auf ein metallisches, balliges Lagerinnenteil 16 aufgesteckt. Der ballige Bereich ist hier als Scheibe 17 mit Kantenrundungen 18, 19 ausgeführt. An die Scheibenflächen schließen sich jeweils in Axialrichtung abstehend zylindrische Seitenfortsätze 29, 20 an, die anschließend in Anschlußpratzen 21, 22 mit Anschlußbohrungen 23, 24 übergehen. Auf die zylindrischen Seitenfortsätze 29, 20 sind die Elastomerlagerschalen 1, 3 mit den zylindrischen Krägen 10, 11 der Zwischenbleche 8, 9 formschlüssig aufgesteckt.

Die Umfangsfläche des Elastomerkörpers 2 aus den aufgesteckten Elastomerlagerschalen 1, 3 weist im nicht vorgespannten Zustand gemäß Fig. 2 in den beiden axialen Seitenbereichen etwa eine Zylinderform 25, 26 auf. Diese Zylinderform 25, 26 hat ein Untermaß gegenüber den zugeordneten Stützringen 6, 7, so daß jeweils eine umlaufende Stufe 27, 28 zwischen dem jeweiligen Stützring 6, 7 und der anschließenden Zylinderform 25, 26 der Gummiteile 4, 5 gebildet ist.

Die Gummiteile 4, 5 der Elastomerlagerschalen 1, 3 verjüngen sich anschließend an die Zylinderformen 25, 26 zur axialen Lagermitte 55 hin mit einem Konuswinkel 30, so daß im zusammengesteckten Zustand gemäß Fig. 2 am Elastomerkörper 2 eine Doppelkonusform 31 zwischen den Zylinderformen 25, 26 gebildet ist.

Die dargestellte Ausführungsform ist hier im Maßstab 1:1 wiedergegeben. Die Stufen 27, 28 haben somit eine Höhe von ca. 1 mm und der Konuswinkel 30 beträgt 7,2°.

Aus Fig. 2 ist weiter ersichtlich, daß die axiale Erstreckung (Projektion auf die Lagerachse 32) der Kantenrundungen 18, 19 und der Zylinderformbereiche 25, 26 etwa gleich lang sind, wobei die Zylinderformbereiche 25, 26 die Kantenrundungen 18, 19 axial etwa zur Hälfte überdecken.

In Fig. 3 ist der Gegenstand nach Fig. 2 mit den Elastomerlagerschalen 1, 3 in ein metallisches Gehäuse als Aufnahmeauge 33 mit zylindrischem Innenraum eingesetzt. Die Stützringe 6, 7 sind zur Lagermitte 55 hin axial vorgespannt und durch Federringe 34, 35 in Nuten 36, 37 an der Innenfläche des Aufnahmeauges 33 gehalten.

Die Vorspannung und der Innendurchmesser des Aufnahmeauges 33 sind dabei so gewählt, daß im dargestellten, nicht eingefederten Zustand des fertig montierten Gelenklagers 38 an der Innenfläche des Aufnahmeauges 33 anliegende, umlaufende Gummiwülste 39, 40 gebildet sind. Wegen der Stufen 27, 28 wird dabei das Gummimaterial der Gummiteile 4, 5 nicht in die Eckrandbereiche gepreßt, sondern es entstehen dort umlaufende, freie Spalte 41, 42. Ebenso ist im Bereich der Doppelkonusform 31 ein umlaufender Spalt 43 zum Aufnahmeauge 33 hin gebildet.

Zwischen den Stützringen 6, 7 und den Krägen 10, 11 besteht jeweils ein Freiraum, in den sich beim Aufbringen der Vorspannung Gummimaterial mit Wülsten 50, 51 ausbreitet.

Das dargestellte Gelenklager 38 hat folgende Funktion:

Das Lagerinnenteil 16 wird beispielsweise mit den Anschlußpratzen 21, 22 am Fahrzeugaufbau befestigt. Das Aufnahmeauge 33 setzt sich in einen Achslenker 52 fort. Bei nur geringfügigen radialen Auslenkungen zwischen dem Lagerinnenteil 16 und dem Aufnahmeauge 33 wirken im wesentlichen nur die Federkennungen in Verbindung mit den umlaufenden Wülsten 39, 40, wobei das Gelenklager 38 relativ weich und geräuscharm ist. Dazu trägt auch die relativ steile Anstellung der Kantenrundungen bei, in derem axialen Bereich die umlaufenden Wülste 39, 40 liegen, so daß hier bei radialen Lagerbelastungen im wesentlichen Druck-Zugbelastungen im Gummimaterial auftreten.

Bei größeren radialen Auslenkungen kommt die Doppelkonusform 31 zur Anlage, wodurch die Druckkomponente im Gummimaterial steigt und das Gelenklager mit progressiv steigender Federkennung härter wird. Bei üblichen Fahrbedingungen wird somit ein weiches, geräuscharmes und komfortables Gelenklager 38 zur Verfügung gestellt, das lediglich bei stärkeren Belastungen progressiv härter wird.

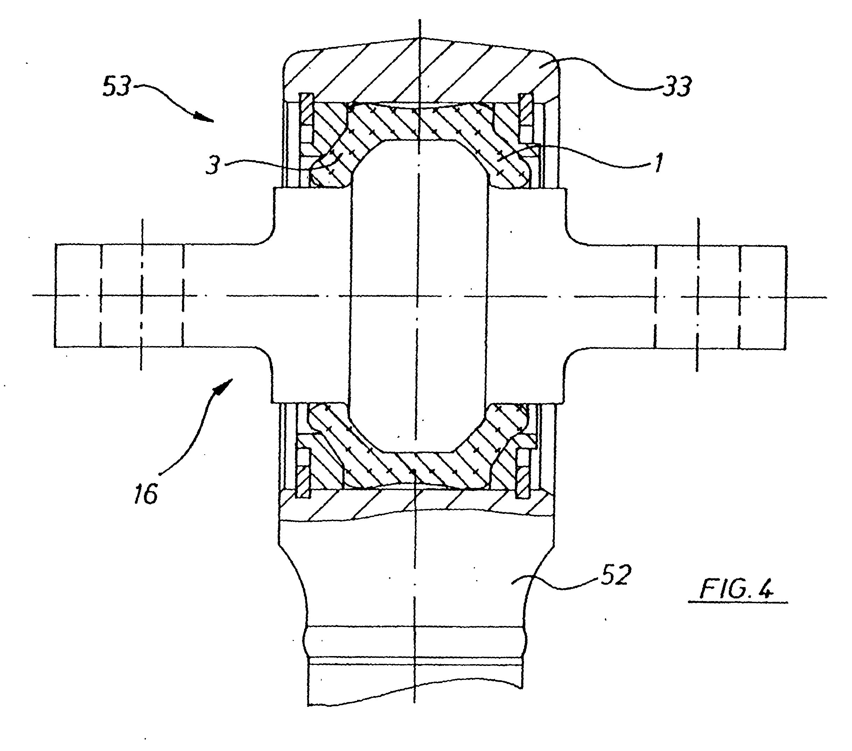

In Fig. 4 ist eine etwas modifizierte Ausführung eines Gelenklagers 53 dargestellt, bei dem keine Zwischenbleche 8, 9 verwendet sind, was je nach den Gegebenheiten möglich ist.

## Patentansprüche

1. Gelenklager, insbesondere zur Lagerung von Achslenkern (52) in Kraftfahrzeugen,
mit einem metallischen, balligen Lagerinnenteil (16) als erstem Lagerteil, mit wenigstens einem abstehendem Lageranschlußteil (21, 22),
mit einem metallischen Gehäuse als zweitem Lagerteil, das einen zylindrischen Innenraum als Aufnahmeauge (33) aufweist,
mit einem Elastomerkörper (2) zwischen dem Lagerinnenteil (16) und dem Aufnahmeauge (33), der den balligen Bereich (17) des Lagerinnenteils (16) übergreift, wobei der Elastomerkörper (2) axial zwischen beidseitigen Stützringen (6, 7) vorgespannt ist, und die Stützringe (6, 7) einen Außendurchmesser entsprechend dem Innendurchmesser des Aufnahmeauges (33) aufweisen, wobei
die Umfangsfläche des Elastomerkörpers (2) im nicht vorgespannten Zustand in den beiden axialen Seitenbereichen etwa zylindrisch geformt ist (25, 26) sowie anschließend an die seitlichen Zylinderformen (25, 26) an der Umfangsfläche zur axialen Lagermitte (55) hin verjüngt ist und eine Doppelkonusform (31) bildet, und wobei
der Elastomerkörper (2), das Lagerinnenteil (16) und das Aufnahmeauge (33) so dimensioniert sind, dass bei aufgebrachter Vorspannung im fertig montierten und nicht eingefederten Zustand des Gelenklagers (38; 53) am Elastomerkörper (2) zwei gegeneinander axial versetzte umlaufende Elastomerwülste (39, 40) gebildet sind, die am Aufnahmeauge vorgespannt anliegen und bei geringer Lagerauslenkung eine relativ weiche Federkennung bewirken, und bei stärkeren Lagerauslenkungen dieser doppelkonische Bereich (31) nach und nach zur Anlage kommt und einen progressiven Anstieg der Federkennung bewirkt,
**dadurch gekennzeichnet,**
**daß** im nicht vorgespannten Zustand die seitlichen Zylinderformen (25, 26) mit einem Untermaß im Durchmesser gegenüber dem Innendurchmesser des Aufnahmeauges (33) bzw. dem Außendurchmesser der Stützringe (6, 7) ausgebildet sind, so daß jeweils eine umlaufende Stufe (27, 28) zwischen einem Stützringumfangsrand und einer Zylinderform (25, 26) eines Seitenbereichs des Elastomerkörpers (2) gebildet ist,
**daß** bei aufgebrachter Vorspannung im fertig montierten und nicht eingefederten Zustand des Gelenklagers (38; 53) die zwei umlaufenden Elastomerwülste (39, 40) auch gegenüber den axial äußeren Stützringen (6, 7) etwas versetzt gebildet sind, und
**daß** im fertig montierten und nicht eingefederten Zustand des Gelenklagers (38; 52) zwischen den Elastomerwülsten (39, 40) ein doppelkonischer Bereich (31) ausgebildet ist.

2. Gelenklager nach Anspruch 1, **dadurch gekennzeichnet, daß** jeweils die umlaufende Stufe (27, 28) zwischen dem Stützringumfangsrand und der angrenzenden Zylindermantelfläche eine geringe Höhe von ca. 1 mm bei üblichen Aufnahmeaugendurchmesser von ca. 80 mm bis 100 mm aufweist.

3. Gelenklager nach Anspruch 1 oder Anspruch 2, **dadurch gekennzeichnet, daß** der Konuswinkel (30) des Doppelkonus (31) zwischen 3° und 15°, insbesondere 7,2° beträgt.

4. Gelenklager nach einem der Ansprüche 1 bis 3, **dadurch gekennzeichnet, daß** der Elastomerkörper (2) in der axialen Längsmittenebene (55) in zwei gleiche Elastomerlagerschalen (1, 3) geteilt ist.

5. Gelenklager nach einem der Ansprüche 1 bis 4, **dadurch gekennzeichnet, daß** das Lagerinnenteil (16) kugelförmig mit beidseitigen Anschlußpratzen ausgebildet ist.

6. Gelenklager nach einem der Ansprüche 1 bis 4, **dadurch gekennzeichnet, daß** das Lagerinnenteil scheibenförmig (17) mit Kantenrundungen (18, 19) ausgeführt ist, wobei beidseitig von den Scheibenflächen Anschlußpratzen (21, 22) abstehen.

7. Gelenklager nach Anspruch 6, **dadurch gekennzeichnet, daß** die zylindrischen Seitenbereiche (25, 26) des Elastomerkörpers (2) und die ' Bereiche der Kantenrundungen (18, 19) axial etwa gleich lang sind und die zylindrischen Seitenbereiche (25, 26) des Elastomerkörpers (2) die Kantenrundungen (18, 19) axial etwa zur Hälfte überdecken.

8. Gelenklager nach einem der Ansprüche 1 bis 7, **dadurch gekennzeichnet, daß** im Bereich der Anlagefläche zum Lagerinnenteil (16) im Elastomerkörper (2) bzw. den Elastomerlagerschalen (1, 3) Zwischenbleche (8, 9) eingeformt sind, die einen zur Lageraußenseite abstehenden zylindrischen Kragen (10, 11) aufweisen, mit dem sie formschlüssig einen jeweils zylindrischen Seitenfortsatz (20, 29) des Lagerinnenteils (2) umgreifen.

## Claims

1. Pivot bearing, in particular for the mounting of axle links (52) in motor vehicles,
with a metallic crowned bearing inner part (16) as first bearing part, with at least one projecting bearing connection part (21, 22),
with a metallic housing as second bearing part, which has a cylindrical interior as a receiving lug (33),
with an elastomeric body (2) between the bearing inner part (16) and the receiving lug (33), which elastomeric body engages over the crowned region (17) of the bearing inner part (16), the elastomeric body (2) being prestressed axially between supporting rings (6, 7) located on both sides, and the supporting rings (6, 7) having an outside diameter corresponding to the inside diameter of the receiving lug (33),
in the non-prestressed state the circumferential surface of the elastomeric body (2) being shaped approximately cylindrically (25, 26) in the two axial side regions and, adjoining the lateral cylindrical shapes (25, 26), being narrowed on the circumferential surface towards to axial bearing centre (55) and forming a double-cone shape (31), and
the elastomeric body (2), the bearing inner part (16) and the receiving lug (33) being dimensioned such that, when prestress is applied, with the pivot bearing (38; 53) being in the ready-mounted and non-compressed state, two peripheral elastomeric beads (39, 40) are formed, which are offset axially relative to one another and which come to bear, prestressed, on the receiving lug and, under slight bearing deflection, give rise to a relatively soft spring characteristic, and, under more pronounced bearing deflections, this double-conical region (31) gradually coming to bear and bringing about progressive rise in the spring characteristic,
**characterized**
**in that**, in the non-prestressed state, the lateral cylindrical shapes (25, 26) are designed to have an undersize in diameter, as compared with the inside diameter of the receiving lug (33) or with the outside diameter of the supporting rings (6, 7), so that, in each case, a peripheral step (27, 28) is formed between a supporting-ring circumferential edge and a cylindrical shape (25, 26) of a side region of the elastomeric body (2),
**in that**, when prestress is applied, with the pivot bearing (38; 53) being in the ready-mounted and non-compressed state, the two peripheral elastomeric beads (39, 40) are also formed, offset somewhat in relation to the axially outer supporting rings (6, 7), and
**in that**, with the pivot bearing (38, 52) being in the ready-mounted and non-compressed state, a double-conical region (31) is formed between the elastomeric beads (39, 40).

2. Pivot bearing according to Claim 1, **characterized in that**, in each case, the peripheral step (27, 28) between the supporting-ring circumferential edge and the adjacent cylinder outer surface has a small height of approximately 1 mm in the case of conventional receiving-lug diameters of approximately 80 mm to 100 mm.

3. Pivot bearing according to Claim 1 or Claim 2, **characterized in that** the cone angle (30) of the double cone (31) is between 3° and 15°, in particular 7.2°.

4. Pivot bearing according to one of Claims 1 to 3, **characterized in that** the elastomeric body (2) is divided, in the axial longitudinal centre plane (55) into two identical elastomeric bearing shells (1, 3).

5. Pivot bearing according to one of Claims 1 to 4, **characterized in that** the bearing inner part (16) is designed spherically with connection claws located on both sides.

6. Pivot bearing according to one of Claims 1 to 4, **characterized in that** the bearing inner part is of disc-shaped design (17), with edge roundings (18, 19), connection claws (21, 22) projecting from the disc surfaces on both sides.

7. Pivot bearing according to Claim 6, **characterized in that** the cylindrical side regions (25, 26) of the elastomeric body (2) and the regions of the edge roundings (18, 19) axially are of approximately the same length, and the cylindrical side regions (25, 26) of the elastomeric body (2) axially cover the edge roundings (18, 19) by approximately half.

8. Pivot bearing according to one of Claims 1 to 7, **characterized in that** intermediate metal sheets (8, 9) are integrally formed in the elastomeric body (2) and the elastomeric bearing shells (1, 3) in the region of the surface coming to bear on the bearing inner part (16), said intermediate metal sheets having a cylindrical collar (10, 11) which projects towards the bearing outside and by means of which they engage positively in each case around a cylindrical side extension (20, 29) of the bearing inner part (2).

## Revendications

1. Palier à articulation, en particulier pour la suspension de guide d'essieux (52) de véhicules automobiles,
avec une partie intérieure de palier (16) bombée, métallique, comme première partie de palier, avec au moins une partie de raccordement des paliers (21, 22) en saillie,
avec un boîtier métallique comme deuxième partie de palier, qui présente un espace intérieur cylindrique faisant office d'oeillet réceptacle (33),
avec un corps en élastomère (2), entre la partie intérieure de palier (16) et l'oeillet réceptacle (3), qui entoure la zone (17) bombée de la partie intérieure de palier (16), le corps en élastomère (2) étant précontraint axialement entre deux bagues d'appui (6, 7) placées des deux côtés, et les bagues d'appui (6, 7) présentant un diamètre extérieur correspondant au diamètre intérieur de l'oeillet réceptacle (33), dans lequel
la surface périphérique du corps en élastomère (2) à l'état non précontraint est de forme sensiblement cylindrique (25, 26) dans les deux zones latérales axiales ainsi qu'en raccordement aux formes cylindriques (25, 26) latérales sur la surface périphérique allant en s'effilant en direction du centre de palier (55) axiale et formant une forme à cône double (31), et où
le corps en élastomère (2), la partie intérieure de palier (16) et l'oeillet réceptacle (33) sont dimensionnés de manière que, lorsque la précontrainte est appliquée à l'état terminé de montage et que le joint à articulation (38; 53) n'est pas à l'état comprimé élastiquement, deux bourrelets en élastomère (39, 40) sur le corps en élastomère (2) sont formés, faisant le pourtour, décalés axialement l'un par rapport à l'autre, appuyant avec précontrainte sur l'oeillet réceptacle, provoquant une caractéristique élastique relativement souple dans la marge de faible débattement du palier, et cette zone (31) à double conicité venant petit à petit en appui et provoquant une augmentation progressive de la caractéristique élastique, lorsque les débattements du palier sont plus importants,
**caractérisé en ce que**,
lorsqu'on est à l'état non précontraint, les formes cylindriques (25, 26) latérales ont un diamètre sous-dimensionné par rapport au diamètre intérieur de l'oeillet réceptacle (33) ou au diamètre extérieur des bagues d'appui (6, 7), de sorte que chaque fois un étagement (27, 28) de pourtour soit formé entre un bord périphérique de bague d'appui et une forme cylindrique (25, 26) d'une zone latérale du corps en élastomère (2),
**en ce que**, lorsqu'une précontrainte est appliquée, à l'état terminé de montage et qu'on est pas à l'état comprimé élastiquement du palier à articulation (38; 53), une zone (31) à double conicité est formée entre les bourrelets en élastomère (39, 40).

2. Palier à articulation selon la revendication 1, **caractérisé en ce que** chaque fois l'étagement (27, 28) de pourtour entre le bord périphérique de bague d'appui et la surface d'enveloppe cylindrique limitrophe présente une faible hauteur, d'environ 1 mm, pour des diamètres d'oeillets réceptacles usuels d'environ 80 mm à 100 mm.

3. Palier à articulation selon la revendication 1 ou la revendication 2, **caractérisé en ce que** l'angle de conicité (30) du double cône (31) est compris entre 3° et 15°, en particulier est de 7,2°.

4. Palier à articulation selon l'une des revendications 1 à 3, **caractérisé en ce que** le corps en élastomère (2) est subdivisé dans le plan médian longitudinal (55) axial, en formant deux coquilles ou coussinets de palier en élastomère (1, 3) identiques.

5. Palier à articulation selon l'une des revendications 1 à 4, **caractérisé en ce que** la partie intérieure de palier (16) est en forme sphérique avec des griffes de raccordement situées de part et d'autre.

6. Palier à articulation selon l'une des revendications 1 à 4, **caractérisé en ce que** la partie intérieure de palier est de configuration discoïde (17) avec des arrondis d'arête (18, 19), des griffes de raccordement (21, 22) faisant saillie des deux côtés, depuis les faces de disque.

7. Palier à articulation selon la revendication 6, **caractérisé en ce que** les zones latérales (25, 26) cylindriques du corps en élastomère (2) et les zones des arrondis d'arête (18, 19) sont axialement à peu près de la même longueur, et les zones latérales (25, 26) cylindriques du corps en élastomère (2) recouvrant axialement à peu près pour moitié les arrondis d'arête (18, 19).

8. Palier à articulation selon l'une des revendications 1 à 7, **caractérisé en ce que**, dans la zone de la surface d'appui envers la partie intérieure de palier (16), dans le corps en élastomère (2) ou dans les coussinets de palier en élastomère (1, 3) sont noyés des tôles intermédiaires (8, 9) présentant une collerette (10, 11) cylindrique en saillie par rapport à la face extérieure de palier, collerette avec laquelle elles entourent, par une liaison à ajustement de forme, un prolongement latéral (20, 29) cylindrique respectif de la partie intérieure de palier (2).
